# EUROPEAN PATENT SPECIFICATION

(11) **EP 3 564 858 B1**
(45) Date of publication and mention of the grant of the patent: **27.12.2023**
(21) Application number: 17886425.2
(22) Date of filing: 27.11.2017
(51) Int. Cl.: G06K 19/07

(54) **PASSIVE PHOTOELECTRIC TAG**
PASSIVES FOTOELEKTRISCHES ETIKETT
ÉTIQUETTE PHOTOÉLECTRIQUE PASSIVE

(30) Priority: 27.12.2016 CN 201611223329
(43) Date of publication of application: 06.11.2019
(73) Proprietor: ZTE Corporation, Shenzhen, Guangdong 518057 (CN)
(72) Inventor: WANG, Ying, Shenzhen Guangdong 518057 (CN); XU, Jidong, Shenzhen Guangdong 518057 (CN); YU, Min, Shenzhen Guangdong 518057 (CN); MAO, Luhong, Shenzhen Guangdong 518057 (CN)
(74) Representative: Petraz, Gilberto Luigi
(86) International application number: PCT/CN2017/113209
(87) International publication number: WO 2018/121155

(56) References cited:
- WO-A2-2010/027459
- CN-A- 103 714 369
- CN-A- 105 141 375
- CN-A- 106 033 552
- CN-A- 106 033 553
- US-B1- 6 299 068

## Description

### FIELD OF THE INVENTION

The disclosure relates to the optical communication technology, and in particular, to a passive photoelectric tag.

### BACKGROUND OF THE INVENTION

With the development of the integrated circuit technology, passive tags based on the Radio Frequency Identification (RFID) technology have entered into a practical stage. The passive tags have advantages of being small in size, low in cost, non-contact, strong in anti-interference capability, long in service life and the like, and have been widely used in the fields of food, medical treatment, military , logistics and the like.

However, a common passive RFID tag needs a reader-writer with a large transmitting power to supply energy for the tag. Therefore, the common passive RFID tag has large electromagnetic radiation, and long-term use of the common passive RFID tag is harmful to the human body. In addition, considering effects of the electromagnetic radiation on health, only 1-2 RFID working frequency bands can be used for the common passive RFID tag, and most of the RFID working frequency bands cannot be used for the common passive RFID tag.

The Visible Light Communication (VLC) technology is an optical wireless communication technology developed recently. A Light Emitting Diode (LED) is used as an emitting electrode, and received by a photoelectric detector to convert into an electric signal. The electric signal is sent to a receiver for demodulation processing, and a processed signal is returned to a reader-writer in a form of an optical signal via an LED driving circuit. Compared with the radio frequency wireless communication technology, the visible light communication technology has advantages of being no pollution, free of electromagnetic radiation, high in accuracy, free of bandwidth limitation and the like. Therefore, the novel passive photoelectric tag formed by applying the optical communication technology to the passive tag has a wide disclosure prospect.

US 6,299,068 B1 discloses a read or read-write label of an optical nature comprising a nonvolatile memory with its control circuit, a control or checking circuit for the charge of a buffer capacitor and a sequence generator making it possible to supply to the outside optical signal sequences in harmony with the states of the different circuits and analyze the optical signals coming from the outside.

WO 2010/027459 A2 discloses optical communication devices, which derive power optically from and communicate optically to a reading device. The communication devices may also receive data from modulated light from the reading device to achieve a bi-directional optical communication link between the self-powered optical communication device and the reading device. The communication device may be powered by ambient light, such as sunlight, captures data from a sensor, and communicates the stored data later to a reading device. The communication device may also be powered locally and communicates through air, optical fiber, or other medium with another communication device.

For all current photoelectric tags, an external power source is needed to provide required energy, which limits costs, a size, and a service life of the photoelectric tags.

### SUMMARY OF THE INVENTION

There may be a requirement for a passive photoelectric tag , to reduce the cost and the size of a photoelectric tag and to prolong the service life of the photoelectric tag.

Such a requirement may be met by the subject matter of the independent claim.
Advantageous embodiments are defined in the dependent claims and the following description.

According to a first aspect of the embodiments of the disclosure, a passive photoelectric tag is provided, and the passive photoelectric tag includes: a photocell, configured to receive an optical signal; a service separation unit, connected with the photocell, and configured to separate the optical signal received by the photocell into a DC voltage and an AC signal; a transceiver unit, connected with the service separation unit, and configured to perform photoelectric conversion processing and electric signal processing on an optical signal in the AC signal under power supply of the DC voltage to generate a signal to be transmitted; and an LED emission unit, connected with the transceiver unit, and configured to transmit the signal to be transmitted in a form of an optical signal. A distance between a wavelength of the LED emission unit and a wavelength of visible light generated by an LED of the reader-writer is larger than a set value. A peak value of an LED emission spectrum of the LED emission unit and a peak vale of reception spectrum sensitivity of a photoelectric detector (PD) in a reader-writer correspond to a same wavelength range.

### BRIEF DESCRIPTION OF THE DRAWINGS

In order to illustrate technical solutions in embodiments of the disclosure or in existing technologies, a simple introduction is made to the accompanying drawings needed to be used in description of the embodiments or the existing technologies. Obviously, the accompanying drawings in the following description only refer to some embodiments of the disclosure. For those skilled in the art, under the premise that no creative work is involved, other drawings can also be obtained based on these accompanying drawings.
Fig. 1 schematically shows a structure of a passive photoelectric tag provided according to the embodiments of the disclosure;
Fig. 2 schematically shows a structure of a passive photoelectric tag provided according to a preferred embodiment of the embodiments of the disclosure;
Fig. 3 schematically shows a structure of a digital circuit module provided according to the embodiments of the disclosure; and
Fig. 4 shows a diagram of optical communication between a passive photoelectric tag and a reader-writer in the embodiments of the disclosure.

### DETAILED DESCRIPTION OF THE EMBODIMENTS

The technical solutions in embodiments of the disclosure will be explained clearly and completely with reference to the accompanying drawings in the embodiments of the disclosure. Obviously, the embodiments described are only some embodiments of the disclosure, rather than all of the embodiments of the disclosure. All other embodiments obtained by those skilled in the art based on the embodiments of the disclosure under the premise that no creative work is involved fall within the protection scope of the disclosure.

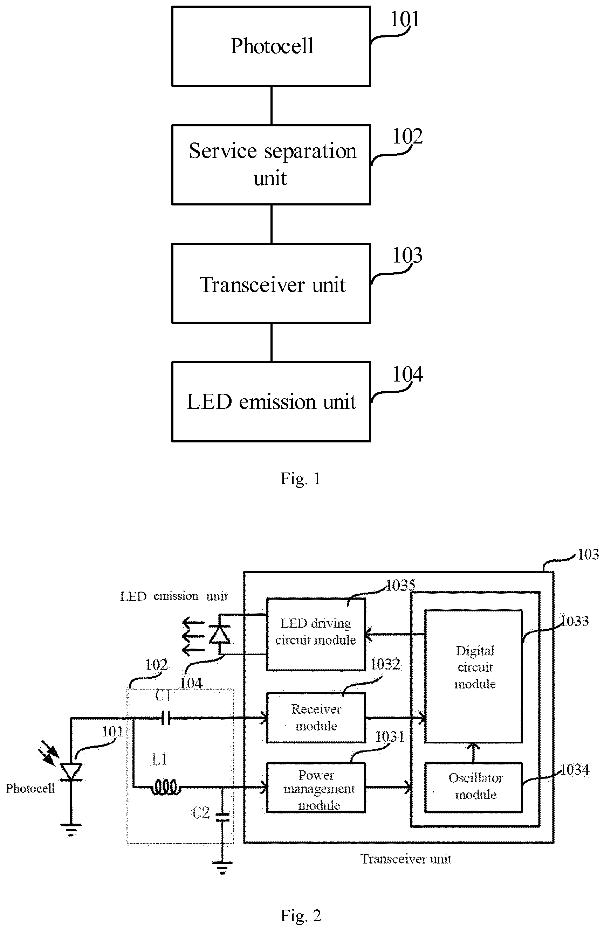

As shown in Fig. 1, a passive photoelectric tag provided by the embodiments of the disclosure includes:
a photocell 101, configured to receive an optical signal;
a service separation unit 102, connected with the photocell 101, and configured to separate the optical signal received by the photocell 101 into a DC voltage and an AC signal;
a transceiver unit 103, connected with the service separation unit 102, and configured to perform photoelectric conversion processing and electric signal processing on an optical signal in the AC signal under power supply of the DC voltage to generate a signal to be transmitted; and
an LED emission unit 104, connected with the transceiver unit 103, and configured to transmit the signal to be transmitted in a form of an optical signal.

The passive photoelectric tag realizes power provision and signal receiving through a photocell, and power supply is not needed, the cost and the size of the passive photoelectric tag is reduced and the service life of the passive photoelectric tag is prolonged.

An internal working manner of the passive photoelectric tag is as follows: the photocell 101 separates a received external visible light signal into two parts through the service separation unit 102. One part of the light is converted into electric energy required for working of the tag, and the converted electric energy provides energy for each unit; the other part of the light signal carrying a signal undergoes a photoelectric conversion processing through the transceiver unit 103, and after the processed electric signal undergoes an electric signal processing, a signal is loaded and transmitted through the LED emission unit 104.

By using the photocell to receive a visible light signal, effective reception and detection of a signal can be achieved by a light reception and detection capability of the photocell, and moreover the photocell can provide a power supply voltage for working of a photoelectric tag through conversion from optical energy to electrical energy, so as to form a non-contact novel passive photoelectric tag. Compared with existing photoelectric tags, the novel passive photoelectric tag is low in cost, small in size, and has a longer service life, and overcomes a disadvantage that the passive radio frequency tag is large in electromagnetic radiation and harmful to a human body.

In the embodiments of the disclosure, the photocell is adopted to replace a common photodiode to serve as a visible light detector. After being irradiated by an LED visible light signal, the photocell generates a constantly changing DC voltage which can be regarded as a superposition of a constant DC voltage and an AC voltage. The constant DC voltage can provide a power supply voltage required by a receiver through circuit processing, so as to obtain a novel passive photoelectric tag.

In practical disclosure, the photocell may include a solar cell. For example, a gallium arsenide solar cell of 10 mm×10 mm×2 mm or a monocrystalline silicon solar cell of 30 mm×30 mm×5 mm may be used.

In an implementation manner of the embodiments of the disclosure, as shown in Fig. 2, the service separation unit 102 specifically includes:
a first capacitor C1 used to isolate a DC signal and extract an AC signal, and a low-pass filter connected in parallel with the first capacitor C1 and used to extract a DC voltage.

In an implementation manner of the embodiments of the disclosure, the low-pass filter includes: an inductor L1 and a second capacitor C2, in which
an end of the inductor L1 is connected with the photocell 101, and another end thereof is connected with the second capacitor C2 and the transceiver unit 103, another end of the second capacitor C2 is grounded.

Specifically, the service separation unit 102 includes two branches. one branch is the first capacitor C1 which may isolate a DC signal and extract and send an AC signal to the transceiver 103 for processing. The other branch includes the low-pass filter formed by an LC. In the low-pass filter, a voltage at two ends of the second capacitor C2 is a DC voltage. The AC signal with a high frequency is blocked by the inductor L1, and has little effect on the voltage at two ends of the second capacitor C2. At last, the voltage at two ends of the second capacitor C2 is input into the transceiver unit 103 to provide power supply to the transceiver unit 103.

A chip capacitor having the largest capacitance value can be used as the second capacitor C2.

In an implementation manner of the embodiments of the disclosure, as shown in Fig. 2, the transceiver unit 103 specifically includes:
a power management module 1031, connected with an output end of a DC voltage of the service separation unit 102, and configured to process the DC signal to obtain a stable voltage source and to provide a power supply voltage for other modules;
a receiver module 1032, connected with an output end of an AC signal of the service separation unit 102, and configured to process the AC signal to obtain a digital signal;
a digital circuit module 1033, connected with the receiver module 1032, and configured to perform encoding and decoding processing and data control to the digital signal to generate a signal to be transmitted;
an oscillator module 1034, connected with the digital circuit module 1033, and configured to generate a clock oscillation signal; and
an LED driving circuit module 1035, connected with the digital circuit module 1033, and configured to convert the signal to be transmitted into an optical signal and to drive the LED emission unit 104 to transmit the optical signal.

In an implementation manner of the embodiments of the disclosure, the power management module 1031 includes a voltage regulator, the voltage regulator includes a band-gap reference, a start-up circuit, an error amplifier, and serves to process a received DC signal to obtain a stable voltage source and provides a power supply voltage to other modules. Power management, having good stability, high power supply rejection (PSR), good linear adjustment rate and load regulation rate, and a low temperature coefficient, can ensure stable working of the receiver. Since a passive structure is adopted, power consumption should be reduced in the meantime of meeting basic performance indices.

The receiver module 1032 mainly includes an equalization circuit, a limiting amplifier circuit, and a comparator circuit, and serves to perform limiting amplification to an input AC digital, and then a signal is processed by a comparator, a digital signal is extracted for a further process through a digital circuit. In the design, realization of low power consumption in a circuit should also be paid attention to.

The digital circuit module 1033 mainly includes a decoder unit, a digital baseband, a memory, and an encoder unit, and mainly serves to perform encoding and decoding processing and data control to the digital signal extracted from the receiver module and generates a signal to be transmitted back to a reader-writer. A digital circuit module based on a reasonable communication protocol may have a stronger anti-interference performance and a lower error rate.

The oscillator module 1034 serves to generate a clock oscillation signal for use in working of a digital circuit, and may use a ring oscillation structure or a relaxation oscillation structure. Stability of an oscillation frequency is a main parameter of the oscillator module. Oscillation frequency of a good oscillator is less affected by voltage, temperature, and the process, which can ensure precision of working of the digital circuit.

The LED driving circuit module 1035 adopts a signal transmitted back to the reader-writer from the digital circuit module to drive the LED emission unit 104 so as to realize normal working of the LED emission unit 104. Since the LED driving circuit module accounts for the largest proportion of overall power consumption, realization of low power consumption of the LED driving circuit module is the key to achieve overall low power consumption of a tag.

The LED emission unit 104 transmits a signal back to the reader-writer in the form of an optical signal to complete optical signal communication. In order to put an LED into a driving circuit for simulation, the LED needs to be modeled, and a spice model or a veriloga model of the LED is put into a circuit for simulation.

As a preferred embodiment, an external solar cell may be used as a photocell. The solar cell may effectively absorb visible light, and convert an optical signal into an electric signal so as to generate a changing DC voltage. A DC signal and an AC signal are separated via a passive circuit network of a service separation unit, and are respectively provided to a power management module and a receiver module, so as to achieve a function of receiving optical signals. The solar cell can be made of materials such as monocrystalline silicon, polycrystalline silicon, gallium arsenide, and so on. Considering the size, the cost, and efficiency of optical energy conversion comprehensively, and under the premise that the solar cell stably provides power supply to a receiver, a solar cell satisfying requirements may be selected eclectically, such as a gallium arsenide solar cell of 10 mm × 10 mm × 2 mm, a monocrystalline silicon solar cell of 30 mm × 30 mm × 5 mm, and the like. It should be specifically pointed out that the size of the solar cell accounts for the largest proportion of the size of an overall passive photoelectric tag and limits the size of a tag. Moreover, the size of the photocell and efficiency of optical energy conversion also limit the amount of energy that the photocell supplies to an internal circuit of the tag, and also affect a working distance of the overall photoelectric tag. Therefore, those skilled in the art can take multiple factors into account when selecting a photocell.

In the embodiment of the disclosure, as shown in Fig. 2, a service separation unit 102 serves to separate a changing voltage generated by the solar cell into a DC signal and an AC signal. Specific implementation is as follows: according to a data transmission rate required by visible light communication, a proper capacitor C1 is selected, so that an AC voltage signal may enter the receiver with little attenuation. L1 and C2 form a low-pass filter which serves to extract a DC voltage signal to supply a power management module. A larger value may be selected for an inductor L1 which has very large impedance when the frequency is higher, so that AC signals are blocked from two ends of the C2. A chip capacitor with a value larger than a set value may be selected for a capacitor C2. On one hand, effects of an AC signal can be reduced; and on the other hand, a large amount of charge can be stored, and it is ensured that a stable voltage may still be provided when a visible light signal changes due to sudden interference.

As shown in Fig. 2, the receiver module 1032 may adopt an optical receiver structure in traditional visible light communication so as to extract a digital signal from a weak electric signal to input the digital signal into a digital circuit module.

As shown in Fig. 2, a power management module 1031, a digital circuit module 1033, and an oscillator module 1034 may be designed according to circuit structures of corresponding modules in a traditional RFID passive tag so as to realize functions of corresponding modules.

As shown in Fig. 2, LED driving circuit module 1035 may adopt a simple series structure, and an LED may be driven by a signal that is transmitted by the digital circuit module back to a reader-writer. As a preferred example, since the LED itself has a larger junction capacitance, an LED electricity release loop may be added to an LED driving circuit so as to increase a working bandwidth of the circuit. In addition, considering that leakage interference should be minimized, as shown in Fig. 1, the distance between a wavelength of an LED and a LED wavelength of a visible light of the reader-writer should be long enough to achieve wavelength division isolation. As a preferred example, a visible light may be selected for the LED of the reader-writer to transmit, and a light with different wavelength from a wavelength of the LED of the reader-writer may be selected for an LED in a photoelectric tag to transmit.

In an implementation manner of the embodiments of the disclosure, a distance between a wavelength of the LED emission unit and an LED wavelength of a visible light of the reader-writer may be larger than a set value. The LED emission unit can use a visible light with a different wavelength from a wavelength of the LED of the reader-writer to transmit.

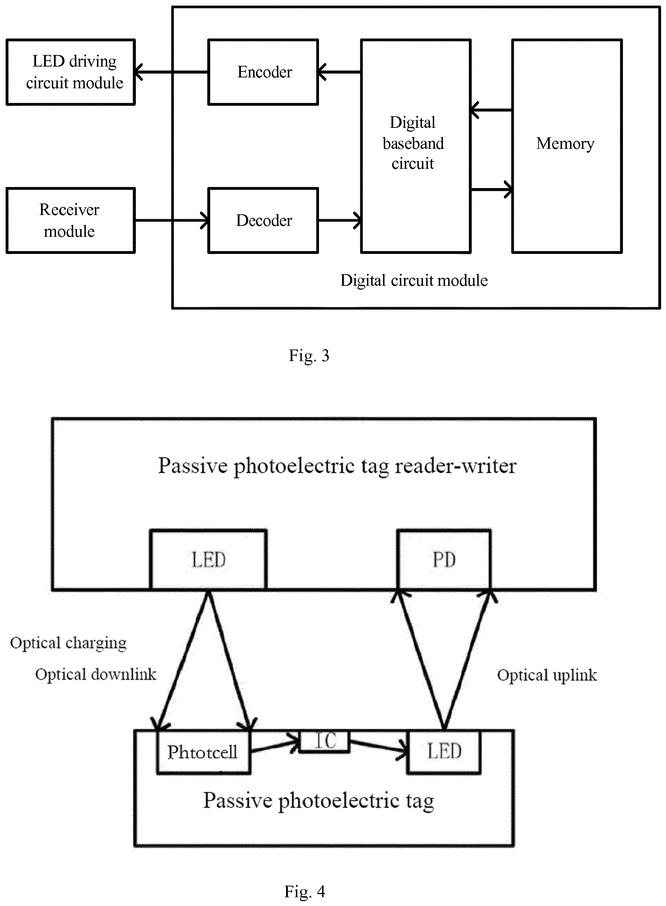

A structure of the digital circuit module 1033 is schematically shown in Fig. 3, and the digital circuit module 1033 mainly includes an encoder, a decoder, a digital baseband circuit, and a memory. A digital signal extracted from the receiver enters the decoder for decoding. A decoded signal is processed by the digital baseband circuit, and carrying out data communication with the memory. In this way, a digital signal that needs to be transmitted back to the reader-writer is obtained. The digital signal that needs to be transmitted back is encoded by the encoder, and an obtained signal is converted by the LED driving circuit into an optical signal which is transmitted back to the reader-writer.

Besides, optical communication between a passive photoelectric tag and a reader-writer is shown in Fig. 4. After an LED of the reader-writer emits visible light carrying information, a photocell in the tag, on one hand, is being charged and converts an optical signal carrying information into an electric signal on the other hand. When charging energy meets requirements for power consumption of an internal circuit of the tag, the circuit works normally. A digital signal is extracted and processed, and returned data is converted into an optical signal carrying information via an LED and a driving circuit thereof. The returned optical signal is received by a photoelectric detector (PD) of the reader-writer for further processing. As can be seen, if a peak value of an LED emission spectrum in the passive photoelectric tag and a peak value of reception spectrum sensitivity of the PD in the reader-writer correspond to a same wavelength range, it means that energy utilization rate is improved, which is beneficial for reducing power consumption of an LED driving circuit. Overall power consumption of the photoelectric tag may be reduced accordingly.

By using a photocell to receive a visible light signal, the light reception and detection capability of the photocell realizes effective signal reception and detection, and moreover the photocell can provide a power supply voltage for working of a photoelectric tag through conversion from optical energy to electrical energy, so as to form a non-contact novel passive photoelectric tag. Compared with existing photoelectric tags, the novel passive photoelectric tag is low in cost, small in size, and has a longer service life, and overcomes a disadvantage that the passive radio frequency tag is large in electromagnetic radiation and is harmful to a human body.

Various embodiments in the description are described in a progressive manner, and reference can be made to other embodiments for the same or similar parts between various embodiments, and the description of each embodiment focuses on its difference from other embodiments. In particular, the description of a device embodiment is relatively simple since the device embodiment is basically similar to a method embodiment, and reference can be made to related description of the method embodiment.

Although the disclosure is described by way of embodiments, it is known to those skilled in art that many variations and modifications can be made to the disclosure without departing from the scope of the disclosure.

## Claims

1. A passive photoelectric tag system comprising a passive photoelectric tag and a reader-writer, the passive photoelectric tag comprising:
a photocell (101), configured to receive an optical signal;
a service separation unit (102), connected with the photocell, and configured to separate the optical signal received by the photocell into a DC voltage and an AC signal;
a transceiver unit (103), connected with the service separation unit, and configured to perform photoelectric conversion processing and electric signal processing on an optical signal in the AC signal under power supply of the DC voltage to generate a signal to be transmitted; and
an LED emission unit (104), connected with the transceiver unit, and configured to transmit the signal to be transmitted in a form of an optical signal,
**characterized in that**
a distance between a wavelength generated by ef the LED emission unit and a wavelength of visible light generated by an LED of the reader-writer is larger than a set value; and
a peak value of an LED emission spectrum of the LED emission unit and a peak value of reception spectrum sensitivity of a photoelectric detector (PD) in a reader-writer correspond to a same wavelength range.

2. The passive photoelectric tag system according to claim 1, wherein the photocell comprises a solar cell.

3. The passive photoelectric tag system according to claim 2, wherein the solar cell comprises:
a gallium arsenide solar cell of 10 mm × 10 mm × 2 mm; or
a monocrystalline silicon solar cell of 30 mm × 30 mm × 5 mm.

4. The passive photoelectric tag system according to claim 1, wherein the service separation unit comprises:
a first capacitor (C1), used to isolate a DC signal and extract an AC signal, and a low-pass filter connected in parallel with the first capacitor and used to extract a DC voltage.

5. The passive photoelectric tag system according to claim 4, wherein the low-pass filter comprises an inductor (L1) and a second capacitor (C2), and wherein an end of the inductor is connected with the photocell, and another end of the inductor is connected with the second capacitor and the transceiver unit, another end of the second capacitor is grounded.

6. The passive photoelectric tag system according to claim 5, wherein the second capacitor is a chip capacitor with the largest capacitance value.

7. The passive photoelectric tag system according to claim 1, wherein the transceiver unit comprises:
a power management module (1031), connected with an output end of a DC voltage of the service separation unit, and configured to process a DC signal to obtain a stable voltage source and to provide a power supply voltage for other modules;
a receiver module (1032), connected with an output end of an AC signal of the service separation unit, and configured to process the AC signal to obtain a digital signal;
a digital circuit module (1033), connected with the receiver module, and configured to perform encoding and decoding processing and data control to the digital signal to generate a signal to be transmitted;
an oscillator module (1034), connected with the digital circuit module, and configured to generate a clock oscillation signal; and
an LED driving circuit module (1035), connected with the digital circuit module, and configured to convert the signal to be transmitted into an optical signal and to drive the LED emission unit to transmit the optical signal.

8. The passive photoelectric tag system according to claim 1, wherein the LED emission unit uses a visible light with a different wavelength from a wavelength of an LED of the reader-writer to transmit.

## Patentansprüche

1. Passives fotoelektrisches Etikettensystem umfassend ein passives fotoelektrisches Etikett und ein Lese-Schreibgerät, wobei das passive fotoelektrische Etikett umfasst:
eine Fotozelle (101), die dazu eingerichtet ist, ein optisches Signal zu empfangen;
eine Diensttrenneinheit (102), die mit der Fotozelle verbunden ist, und die dazu eingerichtet ist, das optische Signal, das von der Fotozelle empfangen wird, in eine Gleichstromspannung und ein Wechselstromsignal zu trennen;
eine Sende-Empfangseinheit (103), die mit der Diensttrenneinheit verbunden ist, und die dazu eingerichtet ist, fotoelektrische Umwandlungsverarbeitung und elektrische Signalverarbeitung an einem optischen Signal im Wechselstromsignal unter Leistungsversorgung der Gleichstromspannung durchzuführen, um ein Signal zu erzeugen, das gesandt werden soll; und
eine LED-Emissionseinheit (104), die mit der Sende-Empfangseinheit verbunden ist, und die dazu eingerichtet ist, das Signal, das gesandt werden soll, in Form eines optischen Signals zu senden,
**dadurch gekennzeichnet, dass**
ein Abstand zwischen einer Wellenlänge, die von der LED-Emissionseinheit erzeugt wird, und einer Wellenlänge von sichtbarem Licht, das von einer LED des Lese-Schreibgeräts erzeugt ist, größer ist als ein Sollwert; und
ein Spitzenwert eines LED-Emissionsspektrums der LED-Emissionseinheit und ein Spitzenwert der Empfangsspektrumempfindlichkeit eines fotoelektrischen Detektors (PD) in einem Lese-Schreibgerät einem gleichen Wellenlängenbereich entsprechen.

2. Passives fotoelektrisches Etikettensystem nach Anspruch 1, worin die Fotozelle eine Solarzelle umfasst.

3. Passives fotoelektrisches Etikettensystem nach Anspruch 2, worin die Solarzelle umfasst:
eine Galliumarsenid-Solarzelle von 10 mm × 10 mm × 2 mm; oder
eine monokristalline Silizium-Solarzelle von 30 mm × 30 mm × 5 mm.

4. Passives fotoelektrisches Etikettensystem nach Anspruch 1, worin die Diensttrenneinheit umfasst:
einen ersten Kondensator (C1), der verwendet wird, um ein Gleichstromsignal zu isolieren und ein Wechselstromsignal zu extrahieren, und einen Tiefpassfilter, der mit dem ersten Kondensator parallel geschaltet ist und verwendet wird, um eine Gleichstromspannung zu extrahieren.

5. Passives fotoelektrisches Etikettensystem nach Anspruch 4, worin der Tiefpassfilter einen Induktor (L1) und einen zweiten Kondensator (C2) umfasst, und worin das eine Ende des Induktors mit der Fotozelle verbunden ist, und das andere Ende des Induktors mit dem zweiten Kondensator und der Sende-Empfangseinheit verbunden ist, ein anderes Ende des zweiten Kondensators geerdet ist.

6. Passives fotoelektrisches Etikettensystem nach Anspruch 5, worin der zweite Kondensator ein Chip-Kondensator mit dem größten Kapazitätswert ist.

7. Passives fotoelektrisches Etikettensystem nach Anspruch 1, worin die Sende-Empfangseinheit umfasst:
ein Leistungsverwaltungsmodul (1031), das mit einem Ausgabeende einer Gleichstromspannung der Diensttrenneinheit verbunden ist, und das dazu eingerichtet ist, ein Gleichstromsignal zu verarbeiten, um eine stabile Spannungsquelle zu erhalten und eine Leistungsversorgungsspannung für andere Module bereitzustellen;
ein Empfängermodul (1032), das mit einem Ausgabeende eines Wechselstromsignals der Diensttrenneinheit verbunden ist, und das dazu eingerichtet ist, das Wechselstromsignal zu verarbeiten, um ein digitales Signal zu erhalten;
ein digitales Schaltungsmodul (1033), das mit dem Empfängermodul verbunden ist, und das dazu eingerichtet ist, Kodier- und Dekodierverarbeitung und Datensteuerung am digitalen Signal durchzuführen, um ein Signal, das gesandt werden soll, zu erzeugen;
ein Oszillatormodul (1034), das mit dem digitalen Schaltungsmodul verbunden ist, und das dazu eingerichtet ist, ein Taktoszillationssignal zu erzeugen; und
ein LED-Treiberschaltungsmodul (1035), das mit dem digitalen Schaltungsmodul verbunden ist, und das dazu eingerichtet ist, das Signal, das gesandt werden soll, in ein optisches Signal umzuwandeln und die LED-Emissionseinheit anzutreiben, um das optische Signal zu senden.

8. Passives fotoelektrisches Etikettensystem nach Anspruch 1, worin die LED-Emissionseinheit ein sichtbares Licht mit einer Wellenlänge verwendet, die von einer Wellenlänge einer LED des Lese-Schreibgeräts unterschiedlich ist, die gesandt werden soll.

## Revendications

1. Système d'étiquette photoélectrique passive comprenant une étiquette photoélectrique passive et un lecteur-scripteur, l'étiquette photoélectrique passive comprenant :
une cellule photoélectrique (101), configurée pour recevoir un signal optique ;
une unité de séparation de service (102), connectée à la cellule photoélectrique, et configurée pour séparer le signal optique reçu par la cellule photoélectrique en une tension CC et un signal CA ;
une unité émettrice-réceptrice (103), connectée à l'unité de séparation de service, et configurée pour effectuer un traitement de conversion photoélectrique et un traitement de signal électrique sur un signal optique dans le signal CA sous l'alimentation d'énergie de la tension CC pour générer un signal à transmettre ; et
une unité d'émission de DEL (104), connectée à l'unité émettrice-réceptrice, et configurée pour transmettre le signal à transmettre sous la forme d'un signal optique,
**caractérisé en ce qu'**
une distance entre une longueur d'onde générée par l'unité d'émission de DEL et une longueur d'onde de lumière visible générée par une DEL du lecteur-scripteur est supérieure à une valeur définie ; et
une valeur de crête d'un spectre d'émission DEL de l'unité d'émission de DEL et une valeur de crête de la sensibilité de spectre de réception d'un détecteur photoélectrique (PD) dans un lecteur-scripteur correspondent à une même plage de longueurs d'onde.

2. Système d'étiquette photoélectrique passive selon la revendication 1, dans lequel la cellule photoélectrique comprend une cellule solaire.

3. Système d'étiquette photoélectrique passive selon la revendication 2, dans lequel la cellule solaire comprend :
une cellule solaire en arséniure de gallium de 10 mm × 10 mm × 2 mm ; ou
une cellule solaire en silicium monocristallin de 30 mm × 30 mm ×5 mm.

4. Système d'étiquette photoélectrique passive selon la revendication 1, dans lequel l'unité de séparation de service comprend spécifiquement :
un premier condensateur (C1), utilisé pour isoler un signal CC et extraire un signal CA, et un filtre passe-bas connecté en parallèle avec le premier condensateur et utilisé pour extraire une tension CC.

5. Système d'étiquette photoélectrique passive selon la revendication 4, dans lequel le filtre passe-bas comprend une inductance (L1) et un second condensateur (C2), et dans lequel une extrémité de l'inductance est connectée à la cellule photoélectrique, et une autre extrémité de l'inductance est connectée au second condensateur et à l'unité émettrice-réceptrice, une autre extrémité du second condensateur est mise à la terre.

6. Système d'étiquette photoélectrique passive selon la revendication 5, dans lequel le second condensateur est un condensateur à puce avec la plus grande valeur de capacité.

7. Système d'étiquette photoélectrique passive selon la revendication 1, dans lequel l'unité émettrice-réceptrice comprend :
un module de gestion de puissance (1031), connecté à une extrémité de sortie d'une tension CC de l'unité de séparation de service, et configuré pour traiter un signal CC pour obtenir une source de tension stable et pour fournir une tension d'alimentation d'énergie pour d'autres modules ;
un module récepteur (1032), connecté à une extrémité de sortie d'un signal CA de l'unité de séparation de service, et configuré pour traiter le signal CA afin d'obtenir un signal numérique ;
un module de circuit numérique (1033), connecté au module récepteur, et configuré pour effectuer un traitement de codage et de décodage et une commande de données au signal numérique pour générer un signal à transmettre ;
un module oscillateur (1034), connecté au module de circuit numérique, et configuré pour générer un signal d'oscillation d'horloge ; et
un module de circuit de commande de DEL (1035), connecté au module de circuit numérique, et configuré pour convertir le signal à transmettre en un signal optique et pour commander l'unité d'émission de DEL afin de transmettre le signal optique.

8. Système d'étiquette photoélectrique passive selon la revendication 1, dans lequel l'unité d'émission de DEL utilise une lumière visible avec une longueur d'onde différente provenant d'une longueur d'onde d'une DEL du lecteur-scripteur à transmettre.
